# FASCICULE DE BREVET EUROPEEN

(11) **EP 3 931 908 B1**
(45) Date de publication et mention de la délivrance du brevet: **26.11.2025**
(21) Numéro de dépôt: 20706276.1
(22) Date de dépôt: 25.02.2020
(51) Int. Cl.: H01Q 1/42, B60Q 1/26, B60R 13/00, B60R 13/04, G01S 13/931, H01Q 1/32, B60Q 1/28

(54) **DISPOSITIF DE PROTECTION DE RADAR RÉTRO-ÉCLAIRÉ**
HINTERLEUCHTETE RADARSCHUTZVORRICHTUNG
BACKLIT RADAR PROTECTION DEVICE

(30) Priorité: 25.02.2019 FR 1901928
(43) Date de publication de la demande: 05.01.2022
(73) Titulaire: OPmobility SE, 69007 Lyon (FR)
(72) Inventeur: STABLO, Frédéric, 01150 Sainte-Julie (FR); LANDOULSI, Alaeddine, 01150 Sainte-Julie (FR)
(74) Mandataire: LLR
(86) Numéro de dépôt international: PCT/EP2020/054948
(87) Numéro de publication internationale: WO 2020/173965

(56) Documents cités:
- WO-A1-2018/121855
- DE-A1- 102015 004 204
- DE-A1- 102017 214 129
- JP-A- 2006 140 956
- JP-A- 2019 007 776
- JP-B2- 5 132 656
- US-A1- 2007 210 979
- US-A1- 2017 036 594
- US-A1- 2018 215 086

## Description

La présente invention concerne le domaine des véhicules automobiles équipés de radar, et plus particulièrement, le domaine des dispositifs pour masquer et protéger un tel radar, encore appelés « radômes ».

Le dispositif selon l'invention s'applique notamment pour les radars disposés dans le pare-choc avant ou arrière des véhicules, par exemple du type ACC.

Pour des raisons de sécurité notamment, il est connu d'équiper des véhicules automobiles de radars, par exemple de type ACC, selon l'expression anglo-saxonne « Adaptative Cruise Control ». Un tel radar sert en particulier à réguler la vitesse des véhicules en fonction du trafic et/ou d'obstacles sur la route. Le radar détecte la vitesse et la distance de l'objet précédant le véhicule porteur, de façon à maintenir notamment une distance de sécurité entre les véhicules.

Selon leur fonction, les radars sont montés en face avant ou arrière des véhicules. Pour cacher ces radars, que ce soit pour les protéger des agressions extérieures (pluies, glace, givre, boues, insectes, feuilles...), ou pour des raisons esthétiques, il est connu d'utiliser un « radôme », c'est à dire une pièce de protection comportant un cache plastique positionné devant le radar.

Un tel cache plastique laisse passer les ondes radars avec une atténuation aussi faible que possible pour ne pas perturber le fonctionnement du radar lui-même.

Il a déjà été proposé dans la demande US2014/0218263, un radôme décoré constitué de deux plaques en matière plastique. Dans ce radôme, une couche métallique décorative a été déposée en phase vapeur sur l'une des plaques, de manière à représenter un motif décoratif. Ce mode de décoration présente l'inconvénient de n'être visible que lorsque le véhicule est éclairé, en particulier à la lumière du jour.

On connaît également du brevet JP5132656 un radôme dont toutes les pièces sont transparentes aux ondes radar. Le radôme comprend un emblème (élément décoratif) et un encadrement, et il comprend également un guide de lumière raccordé à une source lumineuse placé entre l'emblème et l'encadrement. L'encadrement est transparent aux ondes radar et opaque à la lumière visible, la surface de l'encadrement exposée face au guide de lumière étant une surface réfléchissante. En outre, l'emblème est transparent à la lumière dans certaines de ses parties, afin de laisser apparaître un motif lorsqu'il est rétroéclairé. Le rétroéclairage est fourni par un guide de lumière alimenté par des LEDs, et constitué par une plaque de résine rectangulaire qui comporte sur sa face arrière des rainures en V de formes spécifiques nécessaires pour une diffusion uniforme de la lumière. Ce guide de lumière est complexe, en outre cela implique que la forme des rainures soit également conçue de manière à ne pas gêner la transmission des ondes radar. Les documents WO 2018/121855 A1, US 2018/215086 A1, DE 10 2017 214129 A1 et DE 10 2015 004204 A1 divulguent d'autres radômes décorés comportant des sources lumineuses.

L'invention a pour but de remédier à l'inconvénient du radôme décoré et rétroéclairé de l'état de la technique en fournissant un radôme rétroéclairé grâce à un élément lumineux qui ne nécessite aucune mise en œuvre complexe, tant en ce qui concerne l'élément lumineux que le radôme dans son ensemble, conservant une transmission satisfaisante des ondes radar, tout en produisant un rétroéclairage efficace.

A cet effet, l'invention a pour objet un dispositif de protection d'un radar de véhicule automobile, comprenant un corps formé d'une matière transparente aux ondes radar et à la lumière visible, un support opaque à la lumière et transparent aux ondes radar, et un élément lumineux disposé entre le support et le corps, dans lequel une cavité d'air est ménagée entre le support et le corps, le support et le corps étant assemblés entre eux sur leurs bords de préférence de manière étanche, et dans lequel l'épaisseur de la cavité est comprise entre ½ longueur d'onde radar, et 12 fois la longueur d'onde radar, soit entre environ 2 mm et 48 mm. La présence de la cavité d'air est avantageuse en ce qu'elle permet une meilleure transmission des ondes radar, et également du fait qu'elle permet une fabrication aisée du dispositif de protection de radar, en évitant en particulier les risques de détérioration de l'élément lumineux pendant la fabrication. En outre, des essais réalisés par les inventeurs ont montré que la transmission des ondes radar était plus élevée pour des épaisseurs de la cavité d'air compris dans l'intervalle ci-dessus. Selon l'invention, l'élément lumineux comprend des fibres optiques placées sur le support dans la cavité d'air, les fibres optiques de l'élément lumineux ne recouvrant que partiellement la surface du support. Les fibres optiques présentent une bonne adaptation aux formes, par exemple galbées ou constituées par une proéminence. De plus, la luminance est plus importante avec des fibres optiques (1600 candela par mètre carré (cd.m-2 pour une surface de 10 sur 400 mm) qu'avec les guides de lumière plats connus de l'état de la technique, qui présentent une luminance d'environ 200 cd.m-2. L'emploi de fibres optiques permet donc, avec une source lumineuse de même intensité, de produire un élément de décor plus lumineux. De façon traditionnelle, il est considéré que l'homogénéité de l'épaisseur d'un radôme ou de l'épaisseur de couches qui le composent est très importante pour obtenir la fonction de radôme. Dans un guide de lumière constitué par des fibres optiques, l'épaisseur de celui- ci n'est pas homogène (des cylindres placés côte à côte) et les surfaces ne sont pas lisses. Il n'était donc pas naturel d'utiliser des fibres optiques comme guide de lumière dans un radôme, car on pouvait supposer que les fibres optiques allaient atténuer les ondes radar. Par ailleurs, la présence de matériaux hétérogènes pouvant présenter des comportements différents et des épaisseurs différentes pouvait laisser penser que le radôme comportant un tel guide de lumière n'aurait pas un comportement homogène. Les inventeurs ont montré que des fibres optiques présentent une atténuation des ondes radar compatible avec les exigences des constructeurs automobiles. De façon optionnelle les fibres optiques sont disposées en nappe ou en toron.

Avantageusement, l'épaisseur de la cavité est comprise entre 1 et 2 fois la longueur d'onde radar, soit environ entre 4 mm et 8 mm. Dans cet intervalle, la transmission des ondes radar est optimale.

Le dispositif de protection peut en outre comporter l'une ou plusieurs des caractéristiques suivantes, prises seules ou en combinaison.
- l'élément lumineux est transparent aux ondes radar. Cette caractéristique est particulièrement avantageuse lorsque l'élément lumineux est placé devant le radar.
- le corps est partiellement recouvert d'un revêtement opaque à la lumière et transparent aux ondes radar, formant un motif décoratif. Ainsi, les bords du décor sont éclairés par un halo épousant la forme du décor.
- l'épaisseur totale du dispositif de protection est sensiblement constante, et inférieure ou égale à 6 mm. Ceci permet de conserver une bonne transparence aux ondes radar.
- la face interne du corps est sensiblement plane. Cela permet de simplifier la fabrication du dispositif.
- la face interne du corps comprend un relief configuré de manière à améliorer le rendu esthétique du dispositif de protection.
- le revêtement de décor a un aspect métallisé. Son aspect est ainsi en harmonie avec l'aspect esthétique habituel d'un véhicule automobile.
- le revêtement de décor est obtenu par de la couleur ou de la texturation.

Le revêtement de décor est obtenu par une technique connue de l'homme du métier, telle que la technique de marquage à chaud (impression au cours de laquelle un film est pressé contre une surface), ou bien via le surmoulage d'un film métallisé (par exemple via dépôt préalable d'une fine couche de revêtement qui donne un aspect métallique, couche de l'ordre de 0,5 µm), ou bien par application de peinture chromante, ou bien par la technique du dépôt en phase vapeur (« Physical Vapour Deposition », PVD), de métaux tels que de l'indium, de l'or ou de l'étain. L'utilisation de ces techniques et de ces matériaux permet de donner au radôme un aspect métallisé, du fait que l'indium, l'or et l'étain ne perturbent pas la transmission des ondes radar. Un autre avantage de ces différentes techniques est de pouvoir obtenir une épaisseur très fine et d'assurer la transparence du revêtement à la lumière lorsqu'elle est activée tout en permettant d'occulter la source de lumière par réflexion de la lumière ambiante lorsqu'elle est éteinte.

Les fibres optiques sont aptes à être raccordées à une source de lumière située à l'extérieur d'une zone en regard d'une zone de transmission du radar. Cette disposition permet d'éviter de perturber le fonctionnement du radar.

Le support et le corps sont en poly(méthacrylate de méthyle) (PMMA), opaque pour le support et transparent pour le corps.

Le support est en ASA (Acrylonitrile styrène acrylate) ou ABS-PC (Acrylonitrile Butadiène Styrène / Polycarbonate). Le corps est en polycarbonate.

Le support opaque est une pièce transparente à la lumière et aux ondes radar, de préférence obtenue par injection, sur laquelle une résine opaque à la lumière et transparente aux ondes radar a été versée ou sur-injectée. La résine opaque peut être du polyuréthane.

Est également divulgué un procédé d'assemblage du dispositif de protection comprenant les étapes de :
installation de l'élément lumineux sur la face interne du support,
assemblage de manière étanche du corps et du support, par tout moyen approprié, par exemple par collage.

Le procédé d'assemblage peut en outre comporter l'une ou plusieurs des étapes suivantes, prises seules ou en combinaison.
dépôt du revêtement de décor sur la face interne du corps, ,
encapsulation dans une résine de l'élément lumineux sur la face interne du support,
fabrication du support opaque par injection d'une pièce transparente à la lumière et aux ondes radar et application, sur la face externe de cette pièce, d'une résine opaque à la lumière et transparente aux ondes radar, de préférence après les étapes d'installation du élément lumineux et de dépôt du revêtement de décor.

La matière opaque qui remplit l'arrière de l'ensemble constitué par la pièce transparente, le revêtement de décor et l'élément lumineux peut être coulée à une température et une pression moins importante que la température à laquelle la matière transparente est injectée. Ainsi, en revêtant le support par la résine opaque après installation du guide de lumière et dépôt du revêtement de décor, on ne détériore pas la pièce transparente et on préserve le positionnement et la qualité optique des guides de lumière et du revêtement de décor.

### Brève description des figures

L'invention sera mieux comprise à la lecture de la description qui va suivre donnée uniquement à titre d'exemple et faite en se référant aux dessins annexés dans lesquels :
[Fig. 1] La figure 1 est une vue en perspective de la face avant d'un véhicule automobile comprenant un dispositif de protection d'un radar selon un mode de réalisation de l'invention.
[Fig. 2] La figure 2 est une section latérale d'un dispositif de protection d'un radar d'un véhicule automobile selon un premier mode de réalisation, dans lequel l'élément lumineux recouvre partiellement le support.
[Fig. 3] La figure 3 est une section latérale agrandie d'une partie d'un dispositif de protection d'un radar d'un véhicule automobile selon le mode de réalisation de la figure 2.
[Fig. 4] La figure 4 est une section latérale d'un second mode de réalisation ne faisant pas partie de l'invention, dans lequel l'élément lumineux est une LED placée une extrémité du support.

### Description détaillée

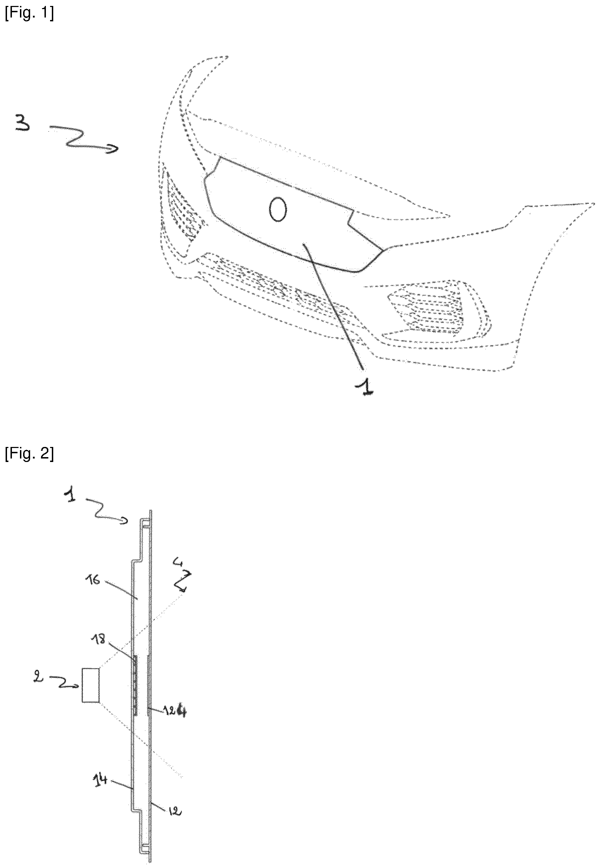

On a représenté sur les figures 1 à 3 un dispositif de protection d'un radar d'un véhicule automobile selon un premier mode de réalisation de l'invention, désigné par la référence générale 1.

La figure 1 représente, à titre illustratif et non limitatif, le dispositif de protection d'un radar en position sur la face avant d'un véhicule.

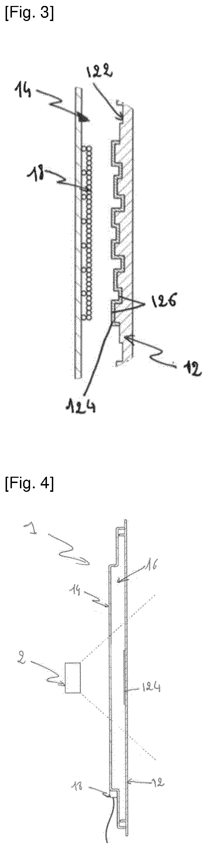

Les figures 2 et 3 représentent un premier mode de réalisation du dispositif de protection 1 d'un radar 2. Dans la suite de la description, le mot « radôme » est employé comme synonyme de « dispositif de protection ». Le radar 2 est placé derrière le dispositif de protection 1. Les ondes radar 3 émises ou reçues par le radar 2 traversent le radôme 1. Le radôme 1 comprend un corps 12, qui est représenté ici comme une plaque sensiblement plane, mais cette forme est uniquement illustrative et non limitative. Par exemple, le corps 12 peut dans d'autres modes de réalisation être galbé. Le radôme comprend également un support 14. Le corps 12 et le support 14 sont assemblé sur leurs bords respectifs. Cet assemblage est de préférence étanche. L'étanchéité est obtenue par tout moyen approprié connu de l'homme du métier, par exemple par collage. Un élément lumineux 18 est fixé sur le support 14.

Une cavité d'air 16 est ménagée entre le corps 12 et le support 14. La présence de cette cavité d'air 16 apporte plusieurs avantages. D'une part, elle permet une fabrication aisée du radôme 1, en évitant les risques de détérioration de l'élément lumineux 18 au cours de cette fabrication. D'autre part, elle permet une meilleure transmission des ondes radar par le radôme 1. La transmission des ondes radar est encore améliorée par la présence de la cavité d'air 16 lorsque l'épaisseur de la cavité d'air 16 est comprise entre 1/2 longueur d'onde radar et 12 longueurs d'onde radar. Les radars utilisés dans les véhicules automobiles ont généralement une fréquence de 77 GHz, par conséquent leur longueur d'onde est d'environ 4 mm. Par conséquent, il est avantageux que l'épaisseur de la cavité d'air 16 soit comprise entre 2 mm et 48 mm. La transmission des ondes radar dans le radôme 1 est optimale lorsque l'épaisseur de la cavité 16 est comprise entre 1 et 2 longueurs d'onde radar, soit entre 4 mm et 8 mm.

Dans un mode de réalisation l'élément lumineux 18 comprend des fibres optiques. Les fibres optiques peuvent être en plastique, par exemple en PMMA (polyméthacrylate de méthyle), ou en un autre polymère, ou bien encore en verre. Les fibres optiques peuvent être tissées avec un fil textile usuel, par exemple du polyester, pour former une nappe de tissu éclairant. Des essais réalisés par les inventeurs ont montré que de telles fibres optiques sont transparentes aux ondes radar. Un élément lumineux 18 comprenant des fibres optiques ne perturbe donc pas le fonctionnement du radar. Les fibres optiques sont alimentées par une source lumineuse qui peut être constituée d'une ou plusieurs LEDs. Avantageusement, la ou les sources lumineuses sont déportées dans une zone non couverte par les ondes radar de manière à ne pas gêner leur transmission.

Dans un autre mode de réalisation ne faisant pas partie de l'invention, l'élément lumineux 18 comprend des OLED (diodes électroluminescentes organiques). L'élément lumineux 18 peut par exemple être un panneau lumineux flexible. Les OLED sont de préférence transparentes aux ondes radar.

Dans encore un autre mode de réalisation ne faisant pas partie de l'invention, l'élément lumineux 18 est un guide de lumière constitué de films en plastique transparent en polycarbonate extrudé présentant une transmission de la lumière supérieure ou égale à 90 % selon la norme ISO 13468-2, et un indice de réfraction de 1,584 selon la norme ISO 62.

Ces guides de lumière sont diffusants, c'est à dire que la surface de sortie de la lumière est formée par une face latérale du guide de lumière. De ce fait, la lumière émerge du guide de lumière selon une direction sensiblement radiale et le flux lumineux distribué est sensiblement constant en tout point de la surface de sortie de la partie diffusante du guide.

Le corps 12 est fabriqué en un matériau polymère transparent à la lumière visible et aux ondes radar. De manière non exhaustive, ce matériau peut être choisi parmi du PMMA (polyméthacrylate de méthyle), du polycarbonate, du polypropylène, un polyamide, un copolyester, de l'acrylonitrile butadiène styrène, de l'acrylonitrile styrène acrylate, du styrène acrylonitrile, un mélange d'acrylonitrile styrène acrylate et de polycarbonate, un mélange de polycarbonate et polytéréphtalate d'éthylène.

Dans un mode de réalisation, visible à la figure 2, la face interne 122 du corps 12 est sensiblement lisse, ce qui simplifie la fabrication.

Dans un autre mode de réalisation, visible à la figure 3, la face interne 122 du corps 12 comprend un relief 126. Ce relief est configuré de manière à améliorer le rendu esthétique du radôme 1.

Dans un autre mode de réalisation visible à la figure 4 ne faisant pas partie de l'invention, l'élément lumineux 18 est déporté sur une extrémité du support 14. Dans ce mode de réalisation, l'élément lumineux 18 illumine la totalité de la cavité 16. De préférence, l'élément lumineux 18 est une LED.

Dans certains cas, il est souhaité de faire apparaître un motif ou élément de décor sur le radôme 1 lorsqu'il est rétroéclairé. Dans ce mode de réalisation, un revêtement, ou film, de décor 124 est formée sur le corps 12, de préférence sur sa face intérieure 122 pour une meilleure tenue dans le temps. Le revêtement de décor 124 peut être conçu pour avoir un aspect métallisé. Il peut être obtenu par la technique de marquage à chaud (« hot stamping »). Le surmoulage d'un film métallisé peut également être utilisé, ou bien de la peinture chromante. Enfin, la technique du dépôt en phase vapeur (« Physical Vapour Deposition », PVD) peut également être utilisée. Des métaux tels que de l'indium, de l'or ou de l'étain, peuvent ainsi être déposés.

Dans un mode de réalisation, le support 14 est fabriqué en un matériau polymère opaque à la lumière visible et transparent aux ondes radar. De manière non limitative, le matériau polymère peut être un polycarbonate (PC), un polypropylène, un polyméthacrylate de méthyle, un polyamide, un copolyester, ou de l'acrylonitrile butadiène styrène (ABS), de l'ASA, de l'ABS-PC, et leurs mélanges, par exemple des copolymères.

De préférence, le support 14 est de couleur noire.

Le support 14 et le corps 12 sont généralement fabriqués par moulage par injection d'un matériau polymère approprié, choisi de manière non limitative parmi ceux décrits ci-dessus. Les différents constituants sont ensuite assemblés.

Dans une étape d'assemblage, l'élément lumineux 18 est fixé sur la face interne du support 14, par exemple par collage, ou par un moyen mécanique.

Puis, dans une autre étape, le corps 12 et le support 14, sont assemblés, de préférence de manière étanche, par tout moyen approprié, par exemple par collage de leurs bords respectifs, ou par fixation mécanique incluant éventuellement un joint d'étanchéité.

Dans un mode de réalisation, un revêtement de décor 124 est déposé sur la face interne 122 du corps 12, généralement selon l'une des techniques décrites plus haut (marquage à chaud, surmoulage d'un film, peinture chromante, PVD). Bien entendu, le dépôt du revêtement de décor 124 s'effectue avant assemblage du corps 12 et du support 14.

Dans un mode de réalisation, l'élément lumineux 18 est encapsulé dans une résine après sa fixation sur la face interne du support 14. Cela permet d'améliorer sa tenue dans le temps,

Dans un mode de réalisation, le support opaque 14 est obtenu par injection d'un plastique transparent à la lumière et aux ondes radar, suivi d'une application, sur la face externe de la pièce transparente ainsi obtenue, d'une résine opaque à la lumière et transparente aux ondes radar, de préférence après les étapes d'installation de l'élément lumineux 18 et de dépôt du revêtement de décor 124.

Ainsi, la résine opaque qui remplit l'arrière de l'ensemble constitué par la pièce transparente, le revêtement de décor et l'élément lumineux peut être coulée à une température et une pression moins importante que la température à laquelle la résine transparente est injectée. Ainsi, en revêtant le support par la résine opaque après installation de l'élément lumineux et dépôt du revêtement de décor, on ne détériore pas la pièce transparente et on préserve le positionnement et la qualité optique de l'élément lumineux et du revêtement de décor.

## Revendications

1. Dispositif (1) de protection d'un radar (2) de véhicule automobile, comprenant un corps (12) formé d'une matière transparente aux ondes radar et à la lumière visible, un support (14) opaque à la lumière et transparent aux ondes radar (4), et un élément lumineux (18) disposé entre le support (14) et le corps (12), une cavité d'air (16) étant ménagée entre le support (14) et le corps (14), le support (14) et le corps (12) étant assemblés entre eux sur leurs bords, de préférence de manière étanche, **caractérisé en ce que** l'épaisseur de la cavité (16) est comprise entre ½ longueur d'onde radar, et 12 fois la longueur d'onde radar, soit entre environ 2 mm et 48 mm, l'élément lumineux comprenant des fibres optiques placées sur le support (14) dans la cavité d'air (16), les fibres optiques de l'élément lumineux (18) ne recouvrant que partiellement la surface du support (14).

2. Dispositif (1) de protection d'un radar (2) de véhicule automobile selon la revendication 1 dans lequel l'épaisseur de la cavité (16) est comprise entre 1 et 2 fois la longueur d'onde radar, soit environ entre 4 mm et 8 mm.

3. Dispositif (1) de protection d'un radar (2) de véhicule automobile selon l'une des revendications précédentes, dans lequel l'élément lumineux (18) est transparent aux ondes radar.

4. Dispositif (1) de protection d'un radar (2) de véhicule automobile selon l'une des revendications précédentes dans lequel le corps (12) est partiellement recouvert d'un revêtement opaque à la lumière et transparent aux ondes radar, formant un motif décoratif (124).

5. Dispositif (1) de protection d'un radar (2) de véhicule automobile selon l'une des revendications précédentes, dans lequel l'épaisseur totale du dispositif (1) de protection est sensiblement constante, et inférieure ou égale à 6 mm.

6. Dispositif (1) de protection d'un radar (2) de véhicule automobile selon l'une des revendications précédentes, dans lequel la face interne (122) du corps (12) est sensiblement plane.

7. Dispositif (1) de protection d'un radar (2) de véhicule automobile selon l'une des revendications 1 à 3, dans lequel la face interne (122) du corps comprend un relief (126) configuré de manière à améliorer le rendu esthétique du dispositif de protection.

## Patentansprüche

1. Schutzvorrichtung (1) für einen Radar (2) eines Kraftfahrzeugs, umfassend einen Körper (12), der aus einem Material gebildet ist, das für Radarwellen und für sichtbares Licht durchlässig ist, einen Träger (14), der für Licht undurchlässig und für Radarwellen (4) durchlässig ist, und ein Leuchtelement (18), das zwischen dem Träger (14) und dem Körper (12) angeordnet ist, wobei ein Lufthohlraum (16) zwischen dem Träger (14) und dem Körper (14) vorgesehen ist, wobei der Träger (14) und der Körper (12) an ihren Rändern zusammengefügt sind, vorzugsweise auf abdichtende Weise, **dadurch gekennzeichnet, dass** die Dicke des Hohlraums (16) zwischen einer 1/2 Radarwellenlänge und dem 12-Fachen der Radarwellenlänge beträgt, das heißt zwischen etwa 2 mm und 48 mm, wobei das Leuchtelement optische Fasern umfasst, die in dem Lufthohlraum (16) an dem Träger (14) platziert sind, wobei die optischen Fasern des Leuchtelements (18) die Oberfläche des Trägers (14) nur teilweise bedecken.

2. Schutzvorrichtung (1) für einen Radar (2) eines Kraftfahrzeugs nach Anspruch 1, wobei die Dicke des Hohlraums (16) zwischen dem 1- und dem 2-Fachen der Radarwellenlänge beträgt, das heißt etwa zwischen 4 mm und 8 mm.

3. Schutzvorrichtung (1) für einen Radar (2) eines Kraftfahrzeugs nach einem der vorhergehenden Ansprüche, wobei das Leuchtelement (18) für Radarwellen durchlässig ist.

4. Schutzvorrichtung (1) für einen Radar (2) eines Kraftfahrzeugs nach einem der vorhergehenden Ansprüche, wobei der Körper (12) teilweise von einer Beschichtung bedeckt ist, die für Licht undurchlässig und für Radarwellen durchlässig ist und ein dekoratives Muster (124) bildet.

5. Schutzvorrichtung (1) für einen Radar (2) eines Kraftfahrzeugs nach einem der vorhergehenden Ansprüche, wobei die Gesamtdicke der Schutzvorrichtung (1) im Wesentlichen konstant und kleiner oder gleich 6 mm ist.

6. Schutzvorrichtung (1) für einen Radar (2) eines Kraftfahrzeugs nach einem der vorhergehenden Ansprüche, wobei die Innenseite (122) des Körpers (12) im Wesentlichen flächig ist.

7. Schutzvorrichtung (1) für einen Radar (2) eines Kraftfahrzeugs nach einem der Ansprüche 1 bis 3, wobei die Innenseite (122) des Körpers eine Erhebung (126) umfasst, die so ausgebildet ist, dass sie die ästhetische Wirkung der Schutzvorrichtung verbessert.

## Claims

1. Device (1) for protecting a motor vehicle radar (2), comprising a body (12) formed from a material that is transparent to radar waves and visible light, a support (14) that is opaque to light and transparent to radar waves (4), and a light element (18) arranged between the support (14) and the body (12), an air cavity (16) being provided between the support (14) and the body (12), the support (14) and the body (12) being assembled together at their edges, preferably in a sealed manner, **characterized in that** the thickness of the cavity (16) is between ½ the radar wavelength and 12 times the radar wavelength, i.e. between approximately 2 mm and 48 mm, wherein the light element (18) comprises optical fibers, the optical fibers being placed on the support (14) in the air cavity (16), wherein the optical fibers of the light element (18) only covers part of the surface of the support (14).

2. Device (1) for protecting a motor vehicle radar (2) according to claim 1, wherein the thickness of the cavity (16) is between 1 and 2 times the radar wavelength, i.e. approximately between 4 mm and 8 mm.

3. Device (1) for protecting a motor vehicle radar (2) according to any of the preceding claims, wherein the light element (18) is transparent to radar waves.

4. Device (1) for protecting a motor vehicle radar (2) according to any of the preceding claims, wherein the body (12) is partially covered with a coating that is opaque to light and transparent to radar waves, forming a decorative pattern (124).

5. Device (1) for protecting a motor vehicle radar (2) according to any of the preceding claims, wherein the total thickness of the protection device (1) is substantially constant, and less than or equal to 6 mm.

6. Device (1) for protecting a motor vehicle radar (2) according to any of the preceding claims, wherein the internal face (122) of the body (12) is substantially planar.

7. Device (1) for protecting a motor vehicle radar (2) according to any of claims 1 to 3, wherein the internal face (122) of the body comprises a relief portion (126) configured to improve the aesthetic finish of the protective device.
